# EUROPEAN PATENT SPECIFICATION

(11) **EP 0 476 655 B1**
(45) Date of publication and mention of the grant of the patent: **04.09.1996**
(21) Application number: 91115948.1
(22) Date of filing: 19.09.1991
(51) Int. Cl.: C04B 35/06, C04B 35/057

(54) **Process of producing a hydration resistant sintered lime**
Verfahren zur Herstellung von gegen Hydratisierung beständigem Sinterkalk
Procédé de préparation de chaux frittée résistante à l'hydratation

(30) Priority: 20.09.1990 JP 251218/90
(43) Date of publication of application: 25.03.1992
(73) Proprietor: YABASHI INDUSTRIES CO., LTD., Ogaki-shi Gifu-ken (JP); GIFU PREFECTURE, Gifu-shi, Gifu-ken (JP)
(72) Inventor: Shimada, Tadashi, Nagoya-shi, Aichi-ken (JP); Suzuki, Nichiho, Ena-shi, Gifu-ken (JP); Ito, Shingo, Motosu-gun, Gifu-ken (JP); Todaka, Yoshihiro, Tajimi-shi, Gifu-ken (JP); Goto, Yoshiki, Ogaki-shi, Gifu-ken (JP)
(74) Representative: Liedl, Christine, Dipl.-Chem.

(56) References cited:
- BE-A- 412 171
- DE-A- 824 773
- FR-A- 2 340 919
- US-A- 4 140 534

## Description

The present invention relates to a process of producing a hydration resistant sintered lime.

Sintered lime is basic and has a high melting point of about 2600°C, low oxygen dissociation pressure, and high thermal conductivity. Thus, the sintered lime has excellent characteristics as a refractory for refining metals such as steel and titanium and as a setter used in baking semiconductors.

However, since sintered lime easily becomes brittle by being hydrated with the moisture in the air, it is difficult to store the sintered lime for a long time and its handling is troublesome.

Conventional methods for preparing hydration resistant sintered lime include a method in which fused or sintered limestone is pulverized to obtain calcium oxide powder and then the calcium oxide powder is molded and resintered (hereinafter referred to as "two-step method"). A method in which limestone is pulverized and the resultant is directly molded and sintered is also known. In these methods the powder may be uniformly mixed with a sintering aid such as ferric oxide or aluminum oxide before molding, or impregnated with pitch or tar after sintering.

However, with these conventional methods it is necessary to carry out the sintering at an extremely high temperature in order to grow large calcium oxide crystals as large as several micrometers to several tens of micrometers so as to reduce the porosity, thereby promoting the hydration resistance.

Further, in the conventional two-step method, since calcium oxide powder is molded, water cannot be used for the molding, so that a troublesome molding method may be necessitated depending on the shape of the molding.

The document DE-C-824 773 describes the production of dolomite bricks of improved stability using, as a starting material, dolomite having a loose, grainy structure and occurring particularly in deposits of the Zechstein-Age and being known as dolomite ash. This dolomite is reported as having the advantage of not needing to be comminuted. Before being sintered, the starting material may be mixed with loam which acts as a stabiliser. A mixture of the dolomite and about 4 to 12 % by weight of loam may be compressed under high pressure, preferably in the dry state, to form bricks which are then baked to a least 1500°C.

The document US-A-4 140 534 describes a method for producing synthetic magnesite-dolomite sinter having an increased magnesia content and a higher hydration and slag resistance than ordinary dolomite. For this, crushed dolomite having a particle size normally within the range of about 6.35 to 25.4 mm in diameter is calcined at a temperature preferably not higher than approximately 900°C, and the mixture is hydrated to develop a size difference between the calcium hydroxide and the magnesium hydroxide particles. The hydroxides are dried at temperatures less than about 300°C without dehydration and then separated according to size. The portion primarily composed of Mg(OH)₂ and having the smaller particle size of about 0.5 to 1.0 µm is then calcined to form the synthetic sinter at temperatures of about 1426°C to 2204°C.

The document BE-A-412 171 describes a process for producing bricks from lime which have the same advantageous properties, in particular hydration resistance, as bricks obtained from magnesia. For this, calcined lime is powdered so as to pass through a screen having 6000 to 20000 openings/cm². The pulverized material is mixed with a small percentage of an oxide of iron, chromium or another metal and compressed in the dry state in the absence of any binder to form bricks which are then baked.

Accordingly, the object of the present invention is to provide a process of producing sintered lime with excellent hydration resistance by a single-step method in which calcium carbonate is directly molded and sintered at a relatively low temperature whilst avoiding the formation of cracks in the molded body or a deformation of the molded body.

The present inventors intensively studied to find that the above-described object of the present invention may be attained by sintering calcium carbonate particles with specific particle sizes at specific temperature after molding. to a specific minimum bulk density, as set out in claim 1.

By the process of the present invention, sintered lime with excellent hydration resistance may be obtained by employing a relatively low temperature. Thus, the process of the present invention makes it easy to use the sintered lime for producing calcia bricks, calcia crucibles, calcia setters or the like, for which it has not been frequently applied because of its hygroscopicity or because of economical reasons. The process of the present invention makes it easy to use the sintered lime, after appropriate pulverization, as an economical intermediate (as a powder material before the final sintering) in the two-step method and as a material for steel refining for which lime with low water content is required. Further, in cases where a sintering aid is used, since water can be used in the molding, the sintering aid can be uniformly dispersed by mixing it with the calcium carbonate particles by using a ball mill or the like when molding, so that the effect of the sintering aid can be exhibited with smaller amount of the sintering aid.

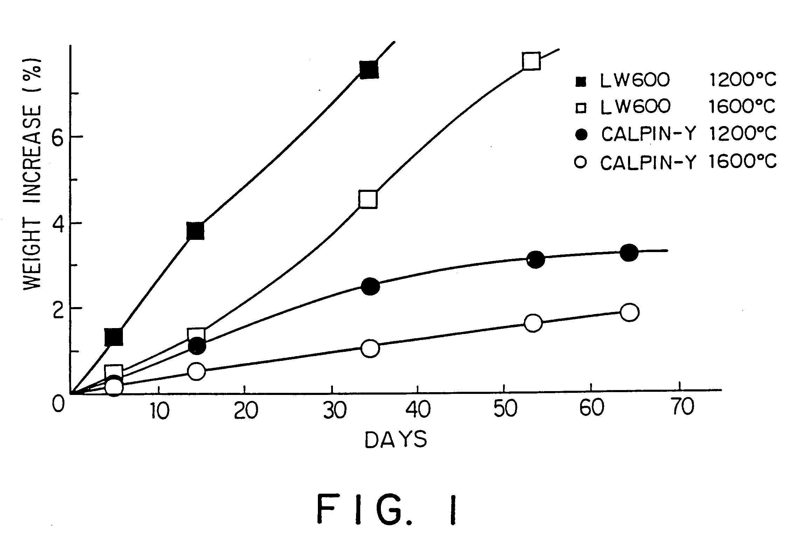

Fig. 1 graphically shows the relationships between the duration (days) in which sintered limes are left to stand at 25°C, 80% RH and the weight increases of the sintered limes.

The powder which is the starting material in the process of the present invention contains not less than 30% by weight, preferably not less than 50% by weight of calcium carbonate particles with particle sizes not larger than 0.3 µm, preferably not larger than 0.1 µm. The powder may consist of calcium carbonate particles alone, or may contain particles of one or more substances other than calcium carbonate. In cases where the powder consists of calcium carbonate particles, the powder may contain calcium carbonate particles with particle sizes not smaller than 0.3 µm, as long as it contains not less than 30% by weight of calcium carbonate particles with particle sizes not larger than 0.3 µm.

The synthetic calcium carbonate prepared by blowing carbon dioxide gas into slaked lime slurry or slaked lime solution is mainly of two kinds, that is, light calcium carbonate and colloidal calcium carbonate. In the light calcium carbonate, crystals with particle sizes of about 0.03 µm aggregate to form spindle-shaped particles with sizes of 1 - 3 µm. On the other hand, the colloidal calcium carbonate consists essentially of calcium carbonate crystals with sizes of 0.02 - 0.3 µm. Thus, the calcium carbonate particles in the powder to be used in the present invention may be single calcium carbonate crystals or may be aggregates of the crystals. The naturally occurring limestone contains calcium carbonate crystals with sizes of about 1 µm even if they are the smallest, and calcium carbonate particles prepared by pulverizing the naturally occurring limestone to particles with sizes not larger than 0.3 µm may also be employed as the powder to be used in the process of the present invention, although it is practically difficult to prepare such small particles by pulverization of limestone.

As mentioned above, the powder to be used in the process of the present invention may contain particles of one or more substances other than calcium carbonate. Examples of these substances include magnesium oxide, magnesium hydroxide, magnesium carbonate, basic magnesium carbonate and dolomite, as well as mixtures thereof. A typical example of the sintered lime containing one or more of these substances is the sintered lime having sintered dolomite composition (i.e., a mixture of calcium oxide and magnesium oxide).

The powder composition may be molded by conventional molding methods such as press molding, pouring molding and extrusion molding, which are well-known in the art. Since calcium carbonate is stable in water, water or an aqueous solution can be used for the molding, so that the molding is easier than in the conventional two-step method. Since the sintered calcium carbonate is shrunk by the sintering, if the bulk density of the molded body is small, cracks may be formed or the molded body may be deformed. Thus, it is preferred to mold the powder to a molded body having a bulk density of not less than 1.1 g/cm³ which is about 40% of the real density (2.7 g/cm³) of calcium carbonate.

The molded body is then sintered at 1000 - 1600°C, preferably at 1200 - 1600°C. Since the dissociation pressure of calcium carbonate reaches atmospheric pressure at about 900°C, it is necessary to carry out the sintering at a temperature not lower than 1000°C. On the other hand, employment of a temperature higher than 1600°C is a waste of energy since sintered lime with sufficient hydration resistance can be obtained by employing a sintering temperature not higher than 1600°C. The sintering time may be appropriately selected depending on the size of the molded body. For example, when the molded body is a plate sizing 150 mm x 150 mm x 20 mm, the sintering time may be about 30 minutes to about 5 hours, more preferably about 1 - 3 hours. The lower the sintering temperature is, the longer the sintering time may preferably be.

The invention will now be described in more detail by way of examples thereof. It should be noted that the examples are presented for the illustration purpose only and should not be interpreted in any restrictive way.

### Example 1

As the calcium carbonate powder for molding and sintering, the following was provided:
i) Pulverized limestone LW-600 (commercially available from Shimizu Kogyo Co., Ltd.)
ii) Particles obtained by pulverizing LW-600 with a ball mill
iii) Light calcium carbonate Calpin-Y (commercially available from Yabashi Industries Co., Ltd.)
iv) Light calcium carbonate PC (commercially available from Shiraishi Kogyo Co., Ltd.)
v) Light calcium carbonate TP-121 (commercially available from Okutama Kogyo Co., Ltd.)
vi) Colloidal calcium carbonate Brilliant 1500 (commercially available from Shiraishi Kogyo Co., Ltd.)

To each of these powders, water and aqueous polyvinyl alcohol solution as a binder were added and the resulting mixtures were dried. The dried materials were pulverized and screened through 1 mm x 1 mm mesh screen. The water content of the particles which passed through the screen was adjusted to about 2%, and the particles were molded into the form of disk with 40 mm diameter with a pressure of 490 bars (500 kgf/cm²).

These molded disks were dried again and sintered in an electric furnace at 1200°C for 1 hour, 1300°C for 1 hour or 1600°C for 3 hours. The bulk densities of the sintered bodies are shown in Table 1. The average sizes of the particles are also shown in Table 1. In case of the particles obtained by pulverizing limestone, the average particle size was measured by observing the particles with a scanning electron microscope. In case of synthetic calcium carbonate particles, the average particle size is the average diameter of the crystallites. The diameters the crystallites were determined by measuring the half-width values from the X-ray diffraction patterns of (104) face of calcite crystals and converting the measured values to D₍₁₀₄₎.

The sintered bodies prepared as described above from LW-600 or Calpin-Y which were sintered at 1200°C for 1 hour or at 1600°C for 3 hours were left to stand at 25°C, 80% RH for 65 days and the weight increases (%) were measured at several time points. The results are shown in Fig. 1. The other sintered bodies prepared as described above were also left to stand in the same environment for 53 days. The weight increases after 53 days from the beginning of the leaving to stand are shown in Table 2.

It can be seen from Table 1 that the bulk densities of the sintered limes prepared from light or colloidal calcium carbonate of which particle sizes are small are prominently increased when compared to those prepared from the pulverized limestone with large particle sizes.

The sintered lime prepared from Calpin-Y which was sintered at 1200°C for 1 hour and the sintered lime prepared from LW-600 which was sintered at 1200°C for 1 hour were observed with a scanning electron microscope. The sintered lime prepared from LW-600 consisted essentially of calcium oxide crystals of cocoon-shape, and a number of pores remained. Thus, the specific surface area is large and the hydration resistance is not good. On the other hand, the sintered lime prepared from Calpin-Y contained no cocoon-shaped crystals but consisted essentially of vitrified texture. Thus, the number of pores is small and so the sintered lime has a much promoted hydration resistance.

In general, the larger the bulk density, the smaller the porosity, so that the better the hydration resistance. However, if once a crack is formed owing to expansion caused by hydration or the like, the surface area is increased, so that the hydration resistance is degraded. Thus, although the bulk density of the sintered lime prepared from LW-600 sintered at 1600°C for 3 hours has larger bulk density than the sintered lime prepared from Calpin-Y which was sintered at 1200°C for 1 hour, the hydration resistance of the former is lower than that of the latter.

**Table 1**

| Calcium Carbonate | | Particle Size (µm) | Bulk Density of Sintered Lime (g/cm³) | | |
|---|---|---|---|---|---|
| Kind | Trade Name | | 1200°C 1 Hour | 1300°C 1 Hour | 1600°C 3 Hours |
| Pulverized Lime | LW-600 | 3.9 | 1.83 | 2.22 | 3.04 |
| | LW-600 (pulverized by a ball mill) | 1.1 | 2.11 | 2.66 | 3.04 |
| Light Calcium Carbonate | Calpin-Y | 0.062 | 2.70 | 3.17 | 3.22 |
| | PC | 0.082 | 2.71 | 3.05 | 3.23 |
| | TP-121 | 0.060 | 2.73 | 3.15 | 3.33 |
| Colloidal Calcium Carbonate | Brilliant 1500 | 0.074 | 2.80 | 3.14 | 3.24 |

**Table 2**

| Calcium Carbonate | | Weight Increase (%) after Leaving to Stand at 25°C, 80% RH | |
|---|---|---|---|
| Kind | Trade Name | 1200°C, 1 Hour | 1600°C, 3 Hours |
| Pulverized Lime | LW-600 | 18.1 | 7.76 |
| | LW-600 (pulverized by a ball mill) | 9.77 | 7.50 |
| Light Calcium Carbonate | Calpin-Y | 3.10 | 1.78 |
| | PC | 4.90 | 2.09 |
| | TP-121 | 3.00 | 1.83 |
| Colloidal Calcium Carbonate | Brilliant 1500 | 3.22 | 2.01 |

### Example 2

LW-600 (average particle size: 3.9 µm) and Calpin-Y (average particle size: 0.062 µm) were mixed at various mixing ratios and each mixture was molded and sintered as in Example 1. The mixing ratios and the bulk densities of the obtained sintered bodies are shown in Table 3. As can be seen from Table 3, by mixing 30% by weight or more of Calpin-Y, the bulk density is largely increased, while if the content of Calpin-Y is smaller than 30% by weight, the bulk density is not sufficiently increased. Further, the higher the sintering temperature, the less the effect of increasing the bulk density by mixing Calpin-Y.

**Table 3**

| Content (wt%) | | Bulk Density of Sintered Lime (g/cm³) | | |
|---|---|---|---|---|
| LW-600 | Calpin-Y | 1200°C, 1 Hour | 1300°C, 1 Hour | 1600°C, 3 Hours |
| 100 | 0 | 1.79 | 2.22 | 3.04 |
| 90 | 10 | 2.24 | 2.78 | 3.19 |
| 70 | 30 | 2.52 | 3.00 | 3.26 |
| 50 | 50 | 2.62 | 3.09 | 3.28 |
| 30 | 70 | 2.66 | 3.09 | 3.28 |
| 10 | 90 | 2.68 | 3.13 | 3.29 |
| 0 | 100 | 2.68 | 3.17 | 3.32 |

### Example 3

To Calpin-Y (average particle size: 0.062 µm), water and Nopcosant RFA (commercially available from Sunnopco Co., Ltd.) as a dispersant in the amount of 0.7% by weight in terms of solid content) were added, and the resulting mixture was well mixed with a ball mill so as to prepare a slurry with a water content of 25%.

The thus obtained slurry was poured into gypsum molds to form a test piece sizing 90 x 20 mm and a cylindrical crucible sizing 60 mm diameter x 60 mm height. After drying, the molded bodies were sintered in an electric furnace at 1600°C for 3 hours. The bulk density of the test piece was 3.33 g/cm³, and the crucible could be sintered without generating cracks and deformation.

### Example 4

Calpin-Y (average particle size: 0.062 µm) was molded and sintered at 1600°C for 3 hours in the same manner as in Example 1. The resulting sintered body was pulverized and the obtained particles were passed through 1 mm x 1 mm mesh screen, to obtain sintered pulverized particles.

To Calpin-Y, aqueous polyvinyl alcohol solution was added and the mixture was dried, followed by pulverization and screening through 1 mm x 1 mm mesh. To the pulverized particles obtained as described in the preceding paragraph, the thus obtained pulverized particles passed through the screen were added in the amount of 30% based on the total weight, and molded into the shape of a disk with a diameter of 40 mm with a pressure of 490 bars (500 kgf/cm²). The obtained molded disk was sintered in an electric furnace at 1600°C for 1 hour to obtain a sintered lime with an bulk density of 2.02 g/cm³. This sintered body is porous as indicated by the bulk density, so that it has high resistance to thermal shocks. The weight increase after leaving to stand at 25°C, 80% RH for 53 days was 3.30%, so that the hydration resistance is not much reduced in spite of the large porosity.

### Example 5

Naturally occurring magnesite ore (purity of 43.8% by weight in terms of MgO) was pulverized and the resultant was passed through a screen of 0.5 mm x 0.5 mm mesh. Calpin-Y (average particle size: 0.062 µm) or LW-600 (particle size: 3.9 µm) was mixed with the pulverized magnesite in the amount of 50% by weight, and the resulting mixture was molded and sintered at 1600°C for 3 hours as in Example 1 so as to obtain mixed sintered bodies of calcium oxide and magnesium oxide. The weight increases of these sintered bodies after leaving them to stand at 25°C, 80% RH are shown in Table 4.

As can be seen from Table 4, by employing Calpin-Y which is calcium carbonate particles with particle sizes of not larger than 0.3 µm, sintered lime with large bulk density and excellent hydration resistance could be obtained.

**Table 4**

| Calcium Carbonate Used | Bulk Density (g/cm³) | Weight Increase (%) |
|---|---|---|
| Calpin-Y | 3.49 | 2.95% |
| LW-600 | 3.23 | 8.71% |

Although the invention was described by way of preferred examples thereof, it is apparent for those skilled in the art that various modifications may be made without departing from the scope of the present invention as defined by the claims.

## Claims

1. A process of producing a hydration resistant sintered lime by molding a powder containing not less than 30 % by weight of calcium carbonate particles to a molded body and sintering the resulting molded body at 1000 to 1600°C,
**characterized in that**
calcium carbonat particles with particle sizes of not larger than 0,3 µm are molded to a molded body having a bulk density of not less then 1,1 g/cm³.

2. A process according to claim 1, wherein said powder consists of calcium carbonate particles alone.

3. A process according to claim 1, wherein said powder contains particles of at least one substance selected from the group consisting of magnesium oxide, magnesium hydroxide, magnesium carbonate, basic magnesium carbonate and dolomite, in addition to said calcium carbonate particles.

## Patentansprüche

1. Verfahren zur Herstellung von gegen Hydratisierung beständigem Sinterkalk durch Formen eines nicht weniger als 30 Gew.-% Calciumcarbonatteilchen enthaltenden Pulvers in einen Formkörper und Sintern des erhaltenen Formkörpers bei 1000 bis 1600°C,
**dadurch gekennzeichnet, daß**
Calciumcarbonatteilchen mit Teilchengrößen von nicht größer als 0,3 µm in einen Formkörper mit einem Schüttvolumen von nicht weniger als 1,1 g/cm³ geformt werden.

2. Verfahren nach Anspruch 1, worin das Pulver nur aus Calciumcarbonatteilchen besteht.

3. Verfahren nach Anspruch 1, worin das Pulver Teilchen von zumindest einer aus Magnesiumoxid, Magnesiumhydroxid, Magnesiumcarbonat, basischem Magnesiumcarbonat und Dolomit ausgewählten Substanz zusätzlich zu den Calciumcarbonatteilchen enthält.

## Revendications

1. Procédé qui consiste à produire une chaux frittée résistante à l'hydratation par moulage d'une poudre, contenant au moins 30 % en poids de particules de carbonate de calcium, afin d'obtenir un corps moulé, et par frittage du corps moulé résultant à une température comprise entre 1000 et 1600° C, caractérisé en ce que les particules de carbonate de calcium, dont les tailles de particule ne dépassent pas 0,3 µm, sont moulées afin d'obtenir un corps moulé présentant une masse volumique apparente d'au moins 1,1 g/cm³.

2. Procédé conforme à la revendication 1, dans lequel ladite poudre est constituée par des particules de carbonate de calcium seules.

3. Procédé conforme à la revendication 1, dans laquelle ladite poudre contient des particules constituées par au moins une substance choisie dans l'ensemble formé par les oxyde de magnésium, hydroxyde de magnésium, carbonate de magnésium, carbonate de magnésium basique et dolomite, en plus desdites particules de carbonate de calcium.
